(19) Europäisches Patentamt
European Patent Office
Office européen des brevets

(11) **EP 4 752 785 A1**

(12) **EUROPEAN PATENT APPLICATION**

(43) Date of publication:
**03.06.2026 Bulletin 2026/23**

(21) Application number: **24221634.9**

(22) Date of filing: **19.12.2024**

(51) International Patent Classification (IPC):
**G06N 3/045** *(2023.01)* **G06N 3/098** *(2023.01)*

(52) Cooperative Patent Classification (CPC):
**G06N 3/045; G06N 3/08; G06N 3/084; G06N 3/098**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.11.2024 US 202463726506 P**

(71) Applicant: **Featurespace Limited
Cambridge, Cambridgeshire CB4 0GF (GB)**

(72) Inventors:
• **PARAMESWARAN, Kamalaruban**
  **Cambridge, CB4 0GF (GB)**
• **RIDDICK, Donald Morford**
  **Cambridge, CB4 0GF (GB)**
• **SUTTON, David**
  **Cambridge, CB4 0GF (GB)**
• **EXCELL, David**
  **Cambridge, CB4 0GF (GB)**

(74) Representative: **Mishcon de Reya LLP
Africa House
70 Kingsway
London WC2B 6AH (GB)**

(54) **COLLABORATIVE TRAINING OF FAIR MACHINE LEARNING MODELS**

(57) A collaboratively trained model obtains an embedding vector and outputs an output vector. A first (second) classification head: (i) obtains an output vector element values; and (ii) outputs a predicted value of a first (second) attribute based on the output vector element values. The first (second) classification head has been trained by a first (second) entity to predict a value of the first (second) attribute based on the output vector element values. The predicted value of the first (second) attribute is useable by the first (second) entity to determine an accuracy of the first (second) classification head in predicting values of the first (second) attribute from output vector element values output by the model. The model is updated to increase (decrease) the accuracy of the first (second) classification head in predicting values of the first (second) attribute from output vector element values output by the model.

100

FIG. 1

**Description**

<u>Technical Field</u>

The present disclosure relates to collaborative training of fair machine learning (ML) models.

<u>Background</u>

Federated learning enables multiple entities to train an ML model collaboratively while maintaining their own decentralised data.

<u>Summary</u>

Aspects of the present disclosure are set out in the appended independent claims. Certain variations are then set out in the appended dependent claims. Further aspects, variations and examples are presented in the detailed description below.
Without loss of generality, the present disclosure relates to data security.
Again, without loss of generality, an adaptation in which outputs from two classification heads are used to update a collaboratively trained ML model is applied in view of the federated nature of the specific technical implementation to which the present disclosure relates.

<u>Brief Description of the Drawings</u>

Embodiments will now be described, by way of example only, with reference to the accompanying drawings, in which:

FIG. 1 is a schematic diagram showing example components of an example system;
FIG. 2 is a schematic diagram showing example components of another example system;
FIG. 3 is a schematic diagram showing example components of another example system; and
FIG. 4 is a schematic diagram showing example components of another example system.

<u>Detailed Description</u>

*Introduction*

A general architecture will now be described, followed by specific example use cases of the methods and systems described herein.

*General Architecture*

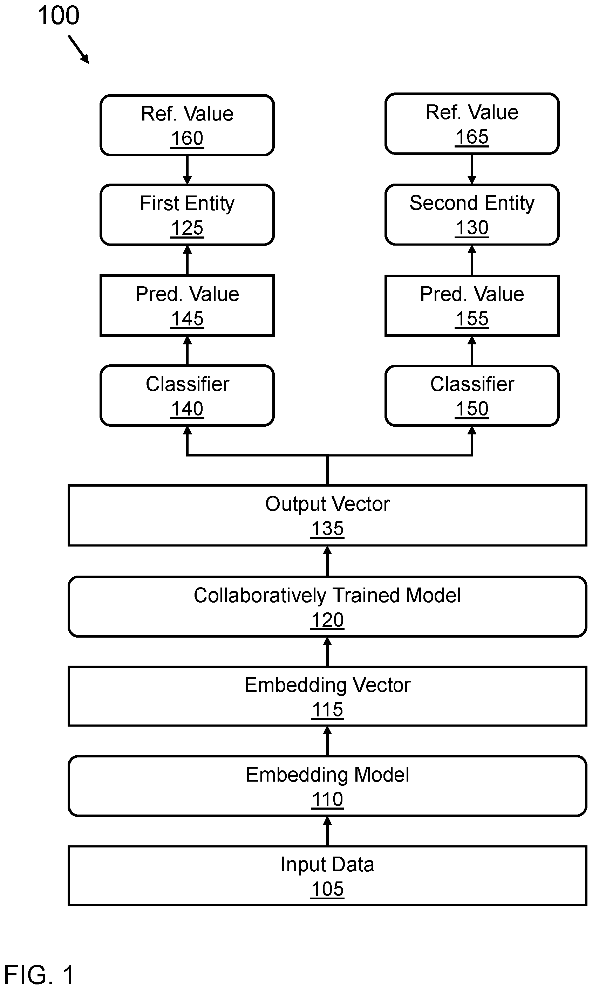

Referring to Figure 1, there is shown an example system 100. The system 100 may be a federated learning system. In a federated learning system, multiple entities may use federated learning to train an ML model collaboratively while maintaining their own decentralised data. The decentralised data is isolated from the other entities in the federation.
An example computer-implemented method that may be performed in the system 100 will now be described. The method may be a computer-implemented method of controlling a federated learning system.
Input data 105 is obtained. The input data 105 may be obtained in various different ways. For example, the input data 105 may be received, may be generated, may be retrieved from storage, or may be obtained in another manner. The input data 105 may take various different forms. Examples of input data 105 will be described in more detail below.
The input data 105 is provided as input to an embedding model 110. Thus, the embedding model 110 obtains the input data 105. The embedding model 110 generates and outputs an embedding vector 115 based on the input data 105. The embedding vector 115 comprises a set of embedding vector elements.
The embedding vector 115 is provided as input to a collaboratively trained model 120. Thus, the collaboratively trained model 120 obtains the embedding vector 115. The collaboratively trained model 120 has been collaboratively trained by first and second entities 125, 130 using federated learning. In this example, the collaboratively trained model 120 is a collaboratively trained ML model.
The collaboratively trained model 120 generates and outputs an output vector 135. The output vector 135 comprises a set of output vector element values. The output vector 135 may comprise only the set of output vector element values or, as will be explained in more detail below, may comprise the set of output vector element values and one or more further sets of output vector element values. The set of output vector element values may correspond to a first subset of output vector element values comprised in the output vector 135, and the further set(s) of output vector element values may correspond to a second (or subsequent) subset of output vector element values comprised in the output vector 135. The first subset of output vector element values may be exclusively, or at least primarily, for task-related data. The second subset of output vector element values may be exclusively, or at least primarily, for sensitive data. The first and second subsets of output vector element values may, for example, correspond to positive and negative element categories respectively, or may correspond to desired and undesired element values respectively.

A first classification head 140 obtains the set of output vector element values. Thus, the first classification head 140 may obtain some or all of the output vector element values of the output vector 135.

In this example, the first classification head 140 has been trained, by the first entity 125, to predict a value of a first attribute based on the set of output vector element values. In other examples, the first classification head 140 may be trained by an entity or system other than the first entity 125. A classification head may also be referred to as a "classifier".

The first classification head 140 outputs a predicted value 145 of the first attribute based on the set of output vector element values.

The predicted value 145 of the first attribute is useable by the first entity 125 to determine an accuracy of the first classification head 140 in predicting values of the first attribute from output vector element values output by the collaboratively trained model 120. The predicted value 145 of first attribute being "useable" by the first entity 125 means that the first entity 125 can use the predicted value 145 of first attribute to determine accuracy but does not necessarily do so. The term "effectiveness" may be used to indicate how effective a classification head is in accurately predicting values of an attribute.

A second classification head 150 also obtains the set of output vector element values. Thus, in this example, the second classification head 150 obtains the same set of output vector element values as the first classification head 140.

In this example, the second classification head 150 has been trained, by the second entity 130, to predict a value of a second attribute based on the set of output vector element values. In other examples, the second classification head 150 may be trained by an entity or system other than the second entity 130.

The second attribute is a different attribute from the first attribute. For example, the first attribute may relate to a downstream task. The second attribute may represent a protected characteristic and/or personally identifiable information (PII). Examples of protected characteristic include but are not limited to: age; gender reassignment; being married or being in a civil partnership; being pregnant or being on maternity leave; disability; race including colour, nationality, ethnic or national origin; religion of belief; sex; and sexual orientation. Examples of PII include but are not limited to: name; address; telephone number; email address; date of birth; and place of birth.

The second classification head 150 outputs a predicted value 155 of the second attribute based on the set of output vector element values.

The predicted value 155 of the second attribute is useable by the second entity 130 to determine an accuracy of the second classification head 150 in predicting values of the second attribute from output vector element values output by the collaboratively learning model 120. The predicted value 155 of second attribute being "useable" by the second entity 130 means that the second entity 130 can use the predicted value 155 of the second attribute to determine accuracy but does not necessarily do so.

In this example, the collaboratively trained model 120 is updated based on at least the predicted value 155 of the second attribute. The updating of the collaboratively trained model 120 may be based on the predicted value 145 of the first attribute. In particular, there may be scenarios in which only the predicted value 155 of the second attribute is used as a basis for updating the collaboratively trained model 120. For example, and as will become apparent from examples described below, there may be scenarios in which disentanglement outweighs accuracy of the first classification head 140. In such examples, significantly more effective disentanglement may justify decreasing accuracy of the first classification head 140 in predicting values of the first attribute irrespective of the predicted value 145 of the first attribute.

In this example, the collaboratively trained model 120 is updated to increase the accuracy of the first classification head 140 in predicting values of the first attribute from output vector element values output by the collaboratively trained model 120. In this example, the accuracy of the first classification head 140 in predicting values of the first attribute is increased as a result of the collaboratively trained model 120 generating output vector element values that enable the first classification head 140 to predict values of the first attribute more accurately. In this example, the updating of the collaboratively trained model 120 does not directly affect configuration of the first classification head 140 itself. That is to say, the update to the collaboratively trained model 120 to increase the accuracy of the first classification head 120 in predicting values of the first attribute from output vector elements values results solely from the fact that the output vector elements values permit more accurate classification by the first classification head 120 in predicting values of the first attribute. There is no change or update to the first classification head 120 itself; its weights, biases, parameters etc. remain the same before and after the update to the collaboratively trained model 120. Accordingly, the update to the collaboratively trained model 120 results in the output vector elements values being 'cleaned' or 'scrubbed' of data and/or information indicative of the second attribute, which may be considered to be a form of noise in such output vector elements.

In this example, the collaboratively trained model 120 is updated to decrease the accuracy of the second classification head 150 in predicting values of the second attribute from output vector element values output by the collaboratively trained model 120. This may happen simultaneously and/or in harmony with the above-described updates to the collaboratively trained model 120. In this example, the accuracy of the second classification head 150 in predicting values of the second attribute is decreased as a result of the collaboratively trained model 120 generating output vector element values that result in the second classification head 150 predicting values of the second attribute less accurately. In this example, the updating of the collaboratively trained model 120 does not directly affect configuration of the second classification head 150 itself. That is to say, the update to the collaboratively trained model 120 to decrease the accuracy of the second classification head 150 in predicting values of the second attribute from output vector elements values results solely from the fact that the output vector elements values permit less accurate classification by the second classification head 150 in predicting values of the second attribute. There is no change or update to the second classification head 150 itself; its weights, biases, parameters etc. remain the same before and after the update to the collaboratively trained model 120. Accordingly, the update to the collaboratively trained model 120 results in the output vector elements values being 'cleaned' or 'scrubbed' of data and/or information indicative of the second attribute.

Thus, the collaboratively trained model 120 is trained and updated to produce sets of output vector element values that the first classification head 140 can use to predict values of the first attribute with high accuracy but that, when also used by the second classification head 150, result in low-accuracy predicted values of the second attribute. Examples described in more detail below relate to example scenarios in which this can be surprisingly effective.

Although, in this example, the collaboratively trained model 120 is updated as described above, in other examples the collaboratively trained model 120 is not updated in this manner or is not updated at all. For example, the predicted value 145 of the first attribute and/or the predicted value 155 of the second attribute may indicate that the collaboratively trained model 120 is already operating effectively and, thus, does not need to be updated.

In this example, the updating of the collaboratively trained model 120 is based on a comparison involving the predicted value 145 of the first attribute and a reference value 160 of the first attribute. In this example, the reference value 160 of the first attribute is accessible to the first entity 125. In this example, the reference value 160 of the first attribute is inaccessible to the second entity 130.

In this example, the updating of the collaboratively trained model 120 is based on a comparison involving the predicted value 155 of the second attribute and a reference value 165 of the second attribute. In this example, the reference value 165 of the second attribute is inaccessible to the first entity 125. In this example, the reference value 165 of the second attribute is accessible to the second entity 130.

In this example, the set of output vector element values is more representative of the first attribute than the second attribute. As a result, the first classification head 140, which has been trained to predict values of the first attribute, may predict values of the first attribute based on the set of output vector element values with high accuracy. Conversely, the second classification head 150, which has been trained to predict values of the second attribute, may predict values of the second attribute based on the set of output vector element values with low accuracy.

In this example, the first entity 125 has black-box access to the embedding model 110. In this example, the second entity 130 has black-box access to the embedding model 110. Having black-box access to the embedding model 110 means being able to input data to the embedding model 110 and being able to obtain output data from the embedding model 110, but not having access to the internal configuration (for example, weights) of the embedding model 110.

In this example, updating the collaboratively trained model 120 comprises applying a parameter-level orthogonalization loss to a final layer of the collaboratively trained model 120. In this example, the parameter-level orthogonalization loss is defined as $\|W^T W - I\|_F^2$, where $W^T W$ represents a weighting vector matrix, where $I$ represents an identity matrix, and where $\|\cdot\|_F^2$ represents Frobenius norm squared. The parameter-level orthogonalization loss will be described in more detail below.

In this example, updating the collaboratively trained model 120 comprises applying a regularization based on a correlation matrix derived from output vector element values of the collaboratively trained model 120. In this example, the correlation matrix is defined as $\frac{1}{n} Z^T Z$, where $Z^T Z$ represents an empirical (cross) correlation matrix computed over a batch (size $n$) of inputs. The regularization will be described in more detail below.

In this example, the first classification head 140 having been trained by the first entity 125 comprises the first classification head 140 having been trained by the first entity 125 using cross-entropy loss with the first attribute.

In this example, the second classification head 150 having been trained by the second entity 130 comprises the second classification head 150 having been trained by the second entity 130 using cross-entropy loss with the second attribute.

The first attribute may be an attribute of a first object, the second attribute may be an attribute of a second object, and the first object may involve the second object. For example, the first object may be an event, and the second object may be a person involved in the event. Thus, the first attribute may relate to an event and/or the second attribute may relate to a person.

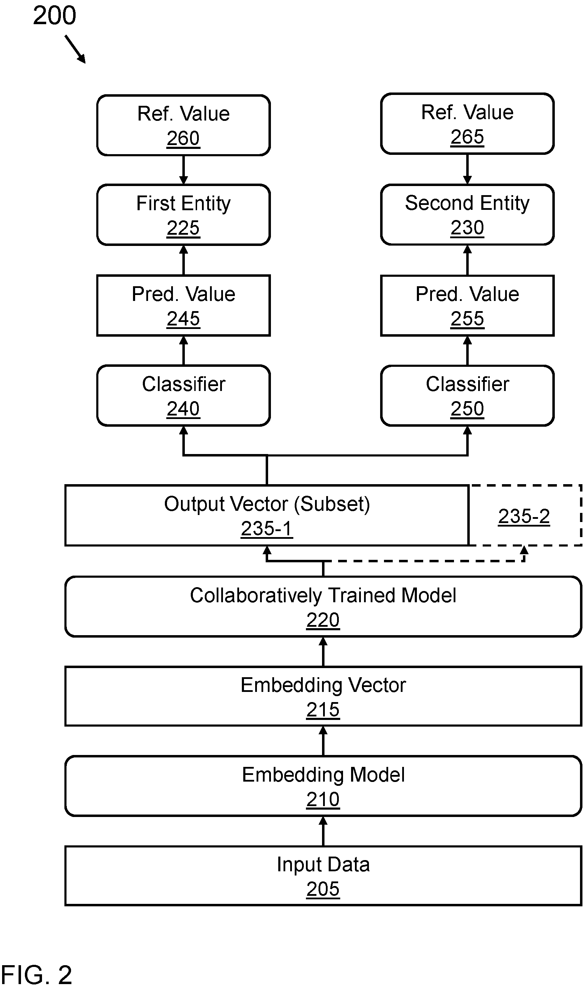

Referring to Figure 2, there is shown another example system 200. Reference signs used in Figure 2 are the same as those used in Figure 1 for the same or similar features but incremented by 100.

In this example, the output vector comprises the set of output vector element values 235-1 described above with reference to Figure 1. In this example, the output vector also comprises a further set of output vector element values 235-2. In this example, the further set of output vector element values 235-2 is inaccessible to the first entity 225. In this example, the further set of output vector element values 235-2 is accessible to the second entity 230.

In this example, the further set of output vector element values 235-2 is more representative of the second attribute than the first attribute.

In this specific example, the set of output vector element values 235-1 comprises more output vector element values than the further set of output vector element values 235-2. However, in other examples, the set of output vector element values 235-1 comprises the same number of output vector element values as the further set of output vector element values 235-2 or contains fewer output vector element values than the further set of output vector element values 235-2.

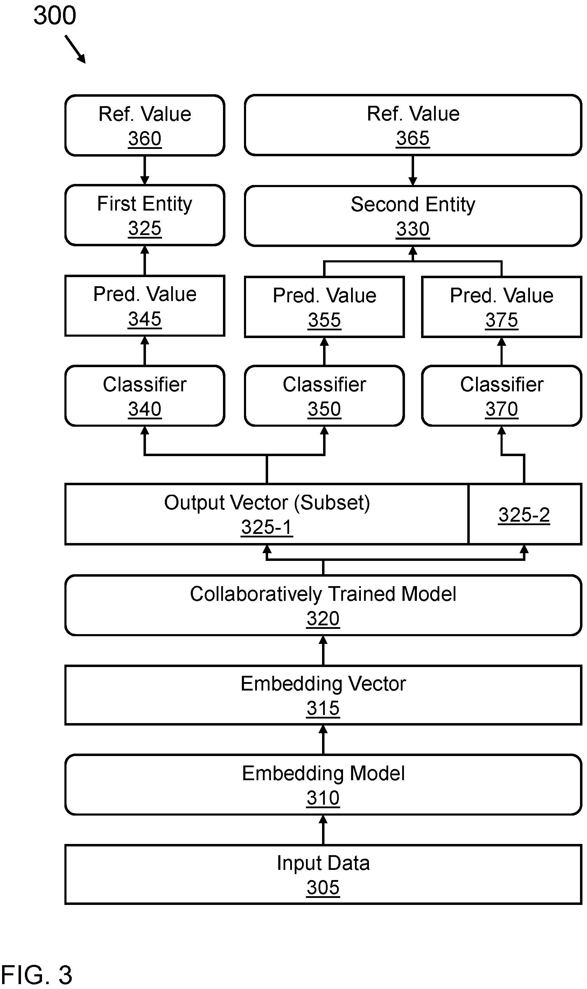

Referring to Figure 3, there is shown another example system 300. Reference signs used in Figure 3 are the same as those used in Figure 2 for the same or similar features but incremented by 100.

In this example, a third classification head 370 obtains the further set of output vector element values 325-2. In this example, the third classification head 370 has been trained, by the second entity 330, to predict a further value of the second attribute based on the further set of output vector element values 325-2. In other examples, the third classification head 370 may be trained by an entity or system other than the second entity 330.

In this example, the third classification head 370 outputs a further predicted value 375 of the second attribute based on the further set of output vector element values 325-2. The further predicted value 375 of the second attribute is useable by the second entity 330 to determine an accuracy of the third classification head 370 in predicting values of the second attribute from further output vector element values output by the collaboratively trained model 320. The further predicted value 375 of the second attribute being "useable" by the second entity 330 means that the second entity 330 can use the further predicted value 375 of the second attribute to determine accuracy but does not necessarily do so.

In this example, the updating of the collaboratively trained model 320 is based on a comparison involving the further predicted value 375 of the second attribute and the reference value 365 of the second attribute.

In this example, updating the collaboratively trained model 320 comprises updating the collaboratively trained model 320 to increase the accuracy of the third classification head 370 in predicting values of the second attribute from further output vector element values output by the collaboratively trained model 320. In this example, the accuracy of the third classification head 370 in predicting values of the second attribute is increased as a result of the collaboratively trained model 320 generating further output vector element values 325-2 that enable the third classification head 370 to predict values of the second attribute more accurately. In this example, the updating of the collaboratively trained model 320 does not directly affect configuration of the third classification head 370 itself. That is to say, the update to the collaboratively trained model 320 to increase the accuracy of the third classification head 370 in predicting values of the second attribute from further output vector elements values results solely from the fact that the further output vector elements values permit more accurate classification by the third classification head 370 in predicting values of the second attribute. There is no change or update to the third classification head 370 itself; its weights, biases, parameters etc. remain the same before and after the update to the collaboratively trained model 320.

Thus, the collaboratively trained model 320 may be updated such that: (i) the first classification head 340 obtains a set of output vector element values 325-1 and predicts values of the first attribute based on the set of output vector element values 325-1 with high accuracy; (ii) the second classification head 350 obtains the same set of output vector element values 325-1 as the first classification head 340 and predicts values of the second attribute based on the set of output vector element values 325-1 with low accuracy; and (iii) the third classification head 370 obtains a further set of output vector element values 325-2 and predicts values of the second attribute based on the further set of output vector element values 325-2 with high accuracy. Examples of scenarios in which this can be surprisingly effective are provided below.

Another example computer-implemented method that may be performed in the system 300 will now be described.

An ML model, such as the collaboratively trained model 320, may obtain an embedding vector, such as the embedding vector 315.

The ML model 320 may output an output vector. The output vector may comprise a set of output vector element values, such as the set of output vector element values 325-1, and a further set of output vector element values, such as the further set of output vector element values 325-2.

A classification head, such as the second classification head 350, may obtain the set of output vector element values 325-1. The classification head 350 may have been trained to predict a value of an attribute, such as a value of a second attribute, based on the set of output vector element values 325-1.

The classification head 350 may output a predicted value 355 of the attribute based on the set of output vector element values 325-1.

The ML model 320 may be updated, based on at least the predicted value 355 of the attribute, to: (i) decrease an accuracy of the classification head 350 in predicting values of the attribute from sets of output vector element values 325-1 output by the ML model 320; and (ii) increase an accuracy of a further classification head, such as the third classification head 370, in predicting values of the attribute from further sets of output vector element values 325-2 output by the ML model 320.

In this example, the system 300 comprises two classification heads 350, 370, rather than one, for predicting values of the second attribute because the set of output vector element values 325-1 has a different number of elements than the further set of output vector element values 325-2. In such an example, a single classification head might not be operable to receive vector element values having multiple different dimensions, or at least might not be optimised for doing so.

Thus, in some examples, a computer-implemented method is performed. An embedding vector may be obtained by an ML model. In some examples, the ML model is a collaboratively trained ML model, the collaboratively trained ML model having been collaboratively trained by first and second entities using federated learning. However, the ML model is not necessarily a collaboratively trained ML model and might not have been collaboratively trained by first and second entities using federated learning. For example, a single entity might have trained the ML model itself. An output vector may be output by the ML model. The output vector may comprise a set of output vector element values. A first classification head may obtain the set of output vector element values. The first classification head may have been trained to predict a value of a first attribute based on the set of output vector element values. The first classification head may output a predicted value of the first attribute based on the set of output vector element values. The predicted value of the first attribute may be useable to determine an accuracy of the first classification head in predicting values of the first attribute from output vector element values output by the ML model. A second classification head may obtain the set of output vector element values. The second classification head may have been trained to predict a value of a second attribute based on the set of output vector element values. The second classification head may output a predicted value of the second attribute based on the set of output vector element values. The predicted value of the second attribute may be useable to determine an accuracy of the second classification head in predicting values of the second attribute from output vector element values output by the ML model. The ML model may be updated based on at least the predicted value of the second attribute. The ML model may be updated to decrease the accuracy of the second classification head in predicting values of the second attribute from output vector element values output by the ML model. The ML model may be updated to increase the accuracy of the first classification head in predicting values of the first attribute from output vector element values output by the ML model. However, instead, the ML model may be updated such that the accuracy of the first classification head in predicting values of the first attribute from output vector element values output by the ML model stays the same or decreases. For example, a significant decrease in the accuracy of the second classification head in predicting values of the second attribute from output vector element values output by the ML model may justify the accuracy of the first classification head in predicting values of the first attribute from output vector element values output by the ML model staying the same or even decreasing.

*Specific Examples: Overview*

Various examples will now be described that may provide mechanisms for testing fairness and/or bias in Artificial Intelligence (AI) without disclosing core attributes to unauthorised entities. Such examples may use systems and methods such as those described above with reference to Figures 1 to 3.

Such examples may provide methods and systems to ensure, or at least increase, fairness in downstream AI and/or ML models that use pre-trained embeddings. Such methods and systems may still adhere to legal constraints that prohibit sharing sensitive demographic attributes with downstream model developers. Such examples may employ a horizontal federated learning framework in which a model developer and a fairness compliance agent (such as a fairness compliance professional) collaboratively train a concept bottleneck model. The concept bottleneck model may disentangle demographic concepts from task-relevant concepts. This may enable effective bias mitigation.

*Specific Examples: Example Architectures*

Such example systems include various components. Several such components will now be described in connection with specific examples.

Examples may use a pre-trained embedding model, such as the above-described embedding model 110, 210, 310. The pre-trained embedding model may be defined as $E: X \rightarrow R^d$. The pre-trained embedding model may generate embeddings, such as the above-described embedding vector 115, 215, 315. The above-described first entity 125, 225, 325 may be an ML model developer. The above-described second entity 130, 230, 330 may be a compliance agent, such as a fairness compliance professional. The model developer may have black-box access to the embedding model. The fairness compliance professional may have black-box access to the embedding model.

Examples may use a downstream model, such as the above-described first classification head 140, 240, 340. The downstream model may be trained using embeddings generated by the pre-trained embedding model. The downstream model may be defined as M: $R^d \rightarrow [0,1]$.

A full model may be denoted as $E \circ M: X \rightarrow [0,1]$.

The embedding model may be trained without using sensitive demographic attributes. However, the downstream full model, $E \circ M$, may still exhibit bias. This may be as a result of proxy variables within the embeddings generated by the pre-trained embedding model. This may occur when such proxy variables correlate with demographic attributes. Examples described herein may ensure, or at least increase, fairness in $E \circ M$. This may be achieved without modifying the pre-trained embedding model and/or without sharing sensitive demographic data with the model developer.

To achieve this, examples may use a federated concept bottleneck model (FCBM). The FCBM may correspond to the above-described collaboratively trained model 120, 220, 320. In examples, the FCBM is a shared model that takes embeddings generated by the pre-trained embedding model as input. The FCBM may transform such an embedding into a lower-dimensional representation. Some elements of the output vector may correspond to demographic attributes and others may correspond to a downstream task. The term "representation" here may correspond to an output vector as described herein and the term "concept" may correspond to elements of the output vector or characteristics of the output vector. In examples, the FCBM includes intermediate dense layers and a final layer. The final layer may correspond to concept representations. The FCBM may be defined as C: $R^d \rightarrow R^n$. Thus, a federated learning setup may be used, and the model developer and the fairness compliance professional may jointly train the FCBM using federated learning. Reference is made to *McMahan, B., Moore, E., Ramage, D., Hampson, S., & y Areas, B. A. (2017) (Communication-Efficient Learning of Deep Networks from Decentralized Data; Artificial Intelligence and Statistics)* in this connection.

As explained above, examples may apply orthogonalization loss to the final layer of the FCBM. This ensures that concepts are uncorrelated, or at least reduces correlation between such concepts. This facilitates disentanglement of demographic and task-related concepts.

In examples, the model developer has access to a (downstream task) dataset of features and labels. The dataset may be represented as $\{(x, E(x), y)\}$, where x is the raw data to which the model developer has access, E(x) is the corresponding embedding, and y is the corresponding label.

Examples may use one or more downstream task heads (DTHs). The DTHs may correspond to the above-described first classification head 140, 240, 340. Thus, in examples, the DTHs are classification heads. In examples, the DTHs are associated with the model developer. The DTHs may be trained, using the concepts from the FCBM, to predict labels and/or values for a downstream task. Thus, the DTHs may be in the form of classification heads that exclude demographic concepts from the FCBM. The DTH classification heads may be trained using cross-entropy loss with task-related labels, y.

In examples, the fairness compliance agent has access to a distinct dataset of features and labels. The dataset may be represented as $\{(x', E(x'), s)\}$, where x' is the raw data to which the fairness compliance agent has access, $E(x')$ is the corresponding embedding, and s is the corresponding sensitive demographic label. Each item of raw data in the dataset may have a corresponding sensitive demographic label, s.

Examples may use one or more demographic concept heads (DCHs). The DCHs may correspond to the above-described second classification head 150, 250, 350 and/or to the above-described third classification head 370. Thus, in examples, the DCHs are classification heads. In examples, the DCHs are associated with the fairness compliance agent. The DCHs may be trained to predict values and/or labels of sensitive demographic attributes using the concepts derived from the final layer of the FCBM. The fairness compliance agent may have access to sensitive demographic attributes but may not be share them with the model developer because of privacy concerns. Thus, on the fairness compliance agent side, classification heads in the form of DCHs may be trained to predict values and/or labels of each sensitive demographic attribute using the corresponding concept(s) from the FCBM. The DCH classification heads may be trained using cross-entropy loss with the demographic labels, s.

Where the DCHs are trained to high accuracy (in that they capture most of the demographic information), and where the orthogonalization loss effectively disentangles the downstream task concepts from the demographic concepts, predictions by the DTHs may advantageously be invariant to the demographic attributes.

As will be described in more detail below, examples may use adversarial training. In such examples, an adversarial network may attempt to predict the sensitive demographic attributes from the non-demographic concepts. The FCBM may be trained to maximize the performance of the DTHs (which may be trained by the model developer) while minimizing the success of the adversarial network (which may be trained by the fairness compliance agent). This may reduce the correlation of the non-demographic concepts with the sensitive attributes. This may lead to a fairer downstream task model.

*Specific Examples: Continuous Bias Monitoring and Mitigation*

An example approach to continuously monitoring bias in the FCBM is outlined below. This demonstrates how sensitive information might leak into non-sensitive components of the FCBM, and how non-sensitive information might begin to proxy for sensitive attributes over time.

*Continuous Bias Monitoring and Mitigation: Monitoring Accuracy Variations in The Sensitive Attribute Classification Heads*

Non-sensitive features, denoted n(x), may be used to check whether non-sensitive features n(x) start carrying information about sensitive attributes, s. Non-sensitive features n(x) should not carry such information. In examples, the accuracy of a classifier that predicts the sensitive attribute, *s*, using the non-sensitive features n(x) as input is tracked over time. Such a classifier may correspond to the above-described second classification head 150, 250, 350. An increase in accuracy suggests that the non-sensitive features n(x) are starting to proxy for the sensitive attributes, s. This indicates a potential leakage and/or emergent pattern that correlates with the sensitive attributes, s.

Sensitive features, denoted s(x), may be used to ensure, or at least check, that sensitive information is confined within its expected boundaries and does not affect non-sensitive components. The accuracy of a classifier that predicts the sensitive attribute, *s*, using the sensitive features, s(x), as input is tracked over time. Such a classifier may correspond to the above-described third classification head 370. A decrease in accuracy may suggest that sensitive information has diffused into non-sensitive components. This would weaken the direct association in the sensitive features, s(x), and would indicate potential leakage into the non-sensitive features, n(x).

An independent monitoring and fine-tuning process may be used. Such a monitoring process may be conducted by a server with access to demographic group labels. This may enable a fairness compliance agent (including a team) to monitor model behaviour independently and to identify potential fairness issues proactively. If the monitoring reveals that sensitive information is improperly influencing non-sensitive components and/or vice versa, a fairness compliance agent may initiate a federated retrain and/or fine-tuning process. This ensures, or at least increases the likelihood, that the model remains aligned with fairness standards without involving the model developer(s). This independence may enhance compliance oversight and/or may allow for timely corrective actions. This may help maintain integrity and/or fairness of the model throughout its deployment.

The monitoring and fine-tuning process may be carried out periodically, or otherwise. The process may be used to demonstrate fairness. If concept drift occurs after initial training, for example such that fairness is below a threshold acceptable level, a federated retrain may be performed.

*Continuous Bias Monitoring and Mitigation: Analysing Correlations in Bottleneck Layer Activations*

The interaction between sensitive and non-sensitive features within the FCBM may be quantified and/or monitored. For each streaming batch of data, a correlation matrix, denoted C = $\frac{1}{n}Z^\top Z$ , may be computed based on activations of the final layer of the FCBM. An "activation" may correspond to a value of an output vector element as described herein. Z represents the activation of the final layer of the FCBM. In more detail, Z represents an output vector for an input, x. For a collection or batch of inputs, denoted {x}, then Z represents a matrix with columns representing the corresponding output vector for each input, *x*, in the collection or batch, {x}. This may enable either or both entities (in this example, the fairness compliance agent and/or the model developer) to monitor and assess the interactions within the FCBM independently. Such dual accessibility may facilitate transparent oversight and/or may enable both entities to ensure collaboratively, or at least increase a likelihood, that sensitive and non-sensitive features remain appropriately disentangled. This may help to maintain fairness integrity of the FCBM.

*Continuous Bias Monitoring and Mitigation: Continuous Disentanglement of Non-Sensitive and Sensitive Features*

Measures may be provided to ensure, or at least increase the likelihood of, continuous disentanglement of non-sensitive features, n(x), and sensitive features, s(x).

During initial training, a parameter-level orthogonalization loss may be applied to the final layer of the FCBM. The parameter-level orthogonalization loss may be defined as $||W^\top W - I||_F^2$ . This seeks to minimise statistical correlation between non-sensitive features, n(x), and sensitive features, s(x). Here, W denotes a weighting vector matrix. The weighting vectors that make up the weighting vector matrix may represent weightings applied to values in a penultimate layer of the model to derive the final-layer values.

Adversarial training, such as that described above, may be used during the initial training phase. Adversarial training may be continued during fine-tuning. This may help to maintain disentanglement.

A regularization technique may be introduced based on the above-described correlation matrix derived from the activations of the final layer of the FCBM. Such a decorrelation loss may be used for fine-tuning to further ensure, or at least increase the likelihood, that non-sensitive features, n(x), and sensitive features, s(x), remain disentangled. Reference is made in this connection to *Zbontar, J., Jing, L., Misra, I., LeCun, Y., & Deny, S. '. (2021) (Barlow Twins: Self-Supervised Learning via Redundancy Reduction; International Conference on Machine Learning).*

*Example Architecture*

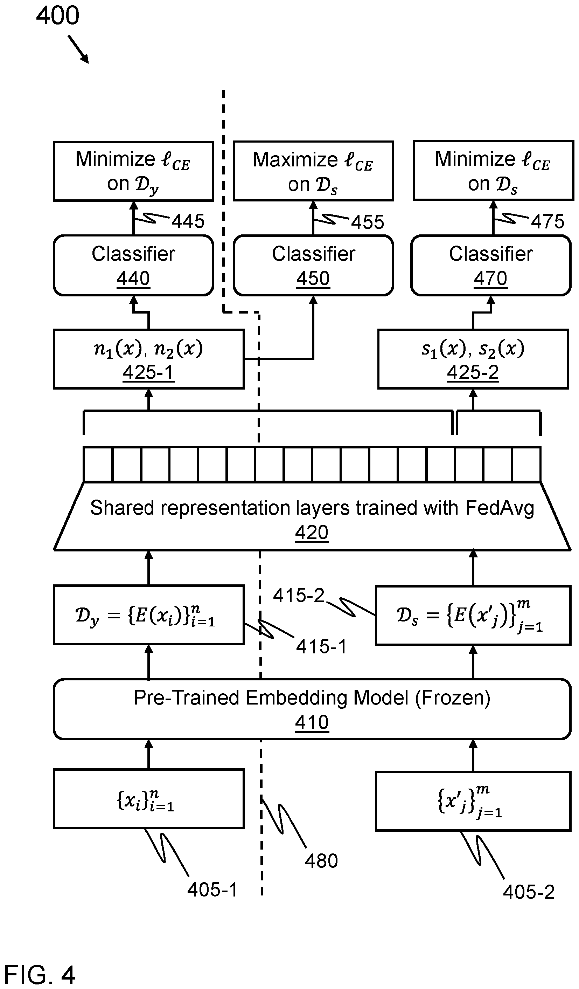

Referring to Figure 4, there is shown another example system 400. Reference signs used in Figure 4 are the same as those used in Figure 3 for the same or similar features but incremented by 100.

Figure 4 includes a broken line 480, which depicts a logical divide between a model developer (to the left of the broken line 480) and a compliance agent (to the right of the broken line 480).

Starting at the bottom of Figure 4 and on the left side of the broken line 480, a first example dataset 405-1, denoted $\{x_i\}_{i=1}^n$, is shown. The first example dataset 405-1 is used in conjunction with a set of actual downstream task labels (not shown), denoted $\{y_i\}_{i=1}^n$, for the first example dataset 405-1. The "actual" labels may correspond to the above-described reference values.

The first example dataset 405-1 is input to a pre-trained embedding model 410. In this example, the pre-trained embedding model 410 is frozen. The pre-trained embedding model 410 outputs embeddings 415-1, denoted $\mathcal{D}_y = \{E(x_i)\}_{i=1}^n$ based on the first example dataset 405-1. The embeddings 415-1 are input to a shared model 420. The shared model 420 includes shared representation layers. In this example, the shared representation layers have been trained with federated averaging (FedAvg). For example, the shared model 420 may have been trained in different locations, with weights averaged across all nodes in a collaborative network. This may enable a network of entities to share the same model but to keep their own data private.

A first set of non-sensitive concepts 425-1, denoted $n_1(x)$, is output by the final layer of the shared model 420. A first set of sensitive concepts 425-2, denoted $s_1(x)$, is also output by the final layer of the shared model 420. The first set of non-sensitive concepts 425-1, $n_1(x)$, and the first set of sensitive concepts 425-2, denoted $s_1(x)$, are generated based on the first example dataset 405-1, denoted $\{x_i\}_{i=1}^n$.

The first set of non-sensitive concepts 425-1, $n_1(x)$, is input to a downstream task classifier 440 for downstream task classification. An output 445 of the downstream task classifier 440 may be used to minimise the cross-entropy loss, denoted $\ell_{CE}$, on $\mathcal{D}_y$. The output 445 of the downstream task classifier 440 may be used in conjunction with the actual downstream task labels, denoted $\{y_i\}_{i=1}^n$, for the first example dataset 405-1. This may indicate prediction accuracy.

The first set of non-sensitive concepts 425-1, $n_1(x)$, may be input to a first sensitive attribute classifier 450 for sensitive attribute classification. However, the entity having access to the first example dataset 405-1 may not have access to the first sensitive attribute classifier 450. Additionally, sensitive labels may not be accessible to the entity having access to the downstream task labels. Thus, it may not be possible to compare the output 455 of the first sensitive attribute classifier 450 to the sensitive labels.

The first set of sensitive concepts 425-2, denoted $s_1(x)$, may be input to a second sensitive attribute classifier 470 for sensitive attribute classification. However, the entity having access to the first example dataset 405-1 may not have access to the second sensitive attribute classifier 470. Additionally, as explained above, sensitive labels may not be accessible to the entity having access to the downstream task labels. Thus, it may not be possible to compare the output 475 of the second sensitive attribute classifier 470 to the sensitive labels.

Returning to the bottom of Figure 4 but on the right side of the broken line 480, a second example dataset 405-2, denoted $\{x'_j\}_{j=1}^m$, is shown. The second example data set 405-2 is used in conjunction with a set of actual sensitive attribute labels (not shown), denoted $\{s_j\}_{j=1}^m$, for the second example dataset 405-2.

The second example dataset 405-2 is input to the pre-trained embedding model 410. The pre-trained embedding model 410 outputs embeddings 415-2, denoted $\mathcal{D}_s = \{E(x'_j)\}_{j=1}^m$, based on the second example dataset 405-2. The embeddings 415-2 are input to the shared model 420 and are processed in the same manner as the first example dataset 405-1.

A second set of non-sensitive concepts 425-1, denoted $n_2(x)$, is output by the final layer of the shared model 420.

A second set of sensitive concepts 425-2, denoted $s_2(x)$, is also output by the final layer of the shared model 420. The second set of non-sensitive concepts 425-1, $n_2(x)$, and the second set of sensitive concepts 425-2, denoted $s_2(x)$, are generated based on the second example dataset 405-2, denoted $\left\{x'_j\right\}_{j=1}^{m}$.

The second set of non-sensitive concepts 425-1, $n_2(x)$, may be input to the downstream task classifier 440 for downstream task classification. However, the entity having access to the second example dataset 405-2 may not have access to the downstream task classifier 440. Additionally, downstream task labels may not be accessible to the entity having access to the sensitive labels. Thus, it may not be possible to compare the output 445 of the downstream task classifier 440 to the downstream task labels.

The second set of non-sensitive concepts 425-1, nz (x), is input to the first sensitive attribute classifier 450 for sensitive attribute classification. An output 455 of the first sensitive attribute classifier 450 may be used to maximize the cross-entropy loss, $\ell_{CE}$, on $\mathcal{D}_s$. The output 455 of the first sensitive attribute classifier 450 may be used in conjunction with the actual sensitive attribute labels, $\left\{s_j\right\}_{j=1}^{m}$, for the second example dataset 405-2. However, the outputs 455 of the first sensitive attribute classifier 450 may be used by themselves without the actual sensitive attribute labels, $\left\{s_j\right\}_{j=1}^{m}$, for the second example dataset 405-2. For example, the outputs 455 of the first sensitive attribute classifier 450 may indicate by themselves that the first sensitive attribute classifier 450 continuously has low confidence in predicting values of the second attribute.

The second set of sensitive concepts, $s_2(x)$, is input to the second sensitive attribute classifier 470 for sensitive attribute classification. An output 475 of the second sensitive attribute classifier 470 is used to minimise the cross-entropy loss, $\ell_{CE}$, on $\mathcal{D}_s$.

An orthogonalization loss may be applied to the final layer of the shared model 420 to minimise the orthogonalization loss, denoted $\ell_{orth}$, between the non-sensitive concepts 425-1, n(x), and the sensitive concepts 425-2, s(x).

An orthogonalization loss may be applied to the final layer of the shared model 420 to minimise the orthogonalization loss, $\ell_{orth}$, between the non-sensitive concepts 425-1, n(x).

An orthogonalization loss may be applied to the final layer of the shared model 420 to minimise the orthogonalization loss, $\ell_{orth}$, between the sensitive concepts 425-2, s(x).

*Numerical Example*

Referring still to Figure 4, a specific numerical example will now be provided.

In this specific example, the pre-trained embedding model 410 is a transaction foundation model trained on a large collection of private transaction datasets. Such a collection may, for example, comprise more than ten million or a hundred million translations related to thousands of accounts. However, embeddings may be hand-engineered in other examples. The downstream model 440 may be a transaction fraud detection model. An example of a downstream task is therefore fraud detection. In this context, examples of demographic group labels (which are examples of sensitive attributes) include, but are not limited to, those used by fairness compliance teams at banks. Reference is made to *Parameswaran Kamalaruban, Yulu Pi, Stuart Burrell, Eleanor Drage, Piotr Skalski, Jason Wong, David Sutton (Evaluating Fairness in Transaction Fraud models: Fairness Metrics, Bias Audits, and Challenges; arXiv:2409.04373)* in relation to fairness in transaction fraud detection models. However, other examples may concern any business or other task.

In this example, the first example dataset 405-1 is defined as $\{x_i\}_{i=1}^{2}$. In this example:

$$x_1 = [Txn\ Id: B101, Card\ Id: 653, Amount: 7.89, MCC: 478, \ldots];$$

and

$$x_2 = [Txn\ Id: B102, Card\ Id: 219, Amount: 19.23, MCC: 127, \ldots].$$

In this example, $y_1 = 1$ and $y_2 = 0$. In this example, a value of $y = 1$ corresponds to fraud and a value of $y = 0$ corresponds to non-fraud. Thus, in this example, a first transaction represented by $x_1$ was labelled as a fraudulent transaction and a second transaction represented by $x_2$ was labelled as a legitimate transaction.

In this example, $\mathcal{D}_y = \{E(x_i)\}_{i=1}^{2}$, where $E(x_1) = [0.21, 0.17, \ldots, 0.81]$ and $E(x_2) = [0.34, 0.41, \ldots, 0.63]$.

In this example, $n(x_1) = [0.80, 0.05, \ldots, 0.10]$ and $n(x_2) = [0.04, 0.07, \ldots, 0.93]$.

In this example, the output 445 of the downstream task classifier 440 is denoted $p(\hat{y}_i = 1)$ and represents a prediction of $y_i$ having a value of 1. In other words, in this example, the output 445 of the downstream task classifier 440 represents the predicted likelihood of the data $x_i$ having a corresponding non-sensitive attribute $y_i$ indicative of fraud.

In this example, $p(\hat{y}_1, = 1) = 0.82$ and $p(\hat{y}_2 = 1) = 0.11$. Since $y_1 = 1$ and $y_2 = 0$, the downstream task classifier 440 is performing accurately at predicting the non-sensitive labels $y_i$ from the non-sensitive features $n(x_1)$ and $n(x_2)$.

In this example, the second example dataset 405-2 is defined as $\left\{x'_j\right\}_{j=1}^2$. In this example:

$$x'_1 = [Txn\ Id: B701, Card\ Id: 177, Amount: 14.33, MCC: 192, ...];$$

and

$$x'_2 = [Txn\ Id: B702, Card\ Id: 112, Amount: 12.11, MCC: 393, ...].$$

In this example, $s_1 = 1$ and $s_2 = 0$. In this example, a value of $s_i = 1$ corresponds to a female customer and a value of $s_i = 0$ corresponds to a male customer. Thus, in this example, a third transaction represented by $x'_1$ was labelled as a transaction made by a female customer and a fourth transaction represented by $x'_2$ was labelled as a transaction made by a male customer.

In this example, $\mathcal{D}_s = \left\{E\left(x'_j\right)\right\}_{j=1}^2$, where $E(x'_1) = [0.11, 0.14, ..., 0.21]$ and $E(x'_2) = [0.44, 0.33, ..., 0.53]$.

In this example, $n(x'_1) = [0.03, 0.95, ..., 0.10]$ and $n(x'_2) = [0.84, 0.07, ..., 0.13]$.

In this example, $s(x'_1) = [0.90, 0.15, 0.10]$ and $s(x'_2) = [0.12, 0.77, 0.03]$.

In this example, the dimensions of $n(x'_1)$ and $n(x'_2)$ are greater than the dimensions of $s(x'_1)$ and $s(x'_2)$.

In this example, the output 455 of the first sensitive attribute classifier 450 is denoted $p(\hat{s}_i = 1)$ and represents a prediction of $s_i$ having a value of 1. In other words, in this example, the output 455 of the first sensitive attribute classifier 450 represents the predicted likelihood of the data $x'_i$ having a corresponding sensitive attribute $s_i$ indicative of a female customer.

In this example, $p(\hat{s}_1 = 1) = 0.07$ and $p(\hat{s}_2 = 1) = 0.73$. Since $s_1 = 1$ and $s_2 = 0$, the first sensitive attribute classifier 450 is not performing accurately at predicting the sensitive labels $s_i$ from the non-sensitive features $n(x'_1)$ and $n(x'_2)$. This indicates that the sensitive information is not leaking into the non-sensitive features 425-1.

Conceivably, the first sensitive attribute classifier 450 could, intentionally, be designed to perform poorly, such that even with sensitive information in non-sensitive features, the first sensitive attribute classifier 450 could not accurately predict sensitive attributes from the non-sensitive features. However, this would not be effective in demonstrating fairness in the system 400. Instead, in accordance with examples, the first sensitive attribute classifier 450 is trained with an incentive to predict sensitive labels $s_i$ accurately, such that its loss is minimised when it predicts sensitive labels $s_i$ perfectly. An ideal scenario is that the first sensitive attribute classifier 450 makes a random prediction, p = 0.5, of a sensitive attribute. In such examples, the first sensitive attribute classifier 450 tries to minimize the cross-entropy loss on sensitive attribute prediction, whereas the shared model 420 tries to maximize the same loss. Thus, the shared model 420 is concerned with a different loss that is maximized when the first sensitive attribute classifier 450 predicts the sensitive attribute perfectly. The aim is therefore to remove some or all of the proxies for the sensitive labels $s_i$ from the output of the shared model 420.

In this example, the output 475 of the second sensitive attribute classifier 470 is denoted $p(\hat{s}_i = 1)$ and represents a prediction of $s_i$ having a value of 1. In other words, in this example, the output 475 of the second sensitive attribute classifier 470 represents the predicted likelihood of the data $x'_i$ having a corresponding sensitive attribute $s_i$ indicative of a female customer.

In this example, $p(\hat{s}_1 = 1) = 0.91$ and $p(\hat{s}_2 = 1) = 0.16$. Since $s_1 = 1$ and $s_2 = 0$, the second sensitive attribute classifier 470 is performing accurately at predicting the sensitive labels $s_i$ from the from the sensitive features $s(x'_1)$ and $s(x'_2)$. This also indicates that the sensitive information is not leaking into the non-sensitive features.

In this example, an orthogonalization loss $\ell_{orth} = \|W^T W - I\|_F^2$ is applied on the final layer of the shared model 420.

Although this specific example relates to fraud detection, another example use case relates to anonymity. For example, the collaboratively trained model 420 may be trained to generate anonymised data by disentangling personal and non-personal information in given input data. The adversarial network may be used to assess how accurate the collaboratively trained model 420 is in doing so. This may be used for privacy-preservation and/or data protection purposes.

*Summary*

AI and ML models are widely used for tasks with significant business and/or societal value. Examples of such tasks include, but are not limited to, treating disease and preventing financial crime. Model providers and developers may be ethically bound to produce accurate models with the highest possible utility levels in these tasks.

However, these models may inadvertently encode biases related to legally protected characteristics. Various laws and regulations in jurisdictions around the world may render any such biases illegal. For instance, the UK's Equality Act 2010 forbids discrimination based on race, age, sex, disability, gender reassignment, marital status, pregnancy or maternity, sexual orientation, and religion. Biases may persist even when these characteristics are not directly included in the input to the model. For example, proxy variables may correlate with protected characteristics in complex, hard-to-detect ways. For instance, merchant type may correlate with sex, disability, or pregnancy, transaction location may correlate with national origin, ethnicity, or race, and account age may correlate with account holder age. Additionally, these biases may emerge post-deployment because of shifts in data distribution in real-world deployments.

Known bias auditing and/or mitigation processes may pose significant data privacy and/or security risks. Auditing may involve accessing data on protected attributes to measure bias. Mitigation may involve accessing such data during model development and/or training. Data privacy obligations may restrict this data from being accessible to model developers and/or providers. Data privacy obligations may, for example, be mandated under The General Data Protection Regulation (GDPR). Data protection officers may deem such data too sensitive and/or risky to share, even when doing so is necessary for compliance with fairness regulations.

As a result, models may not be deployed, bias mitigation may not be implemented, and/or ongoing fairness evaluation may not be conducted. Each of these scenarios poses risks to citizens. Addressing these challenges supports fair and compliant AI and ML models.

Examples described herein may addresses some or all of the following challenges, for example simultaneously.

Firstly, examples may align AI and ML models with legal and/or regulatory obligations. Such obligations may be on fairness and/or non-discrimination with respect to one or more legally protected individual characteristics.

Secondly, examples may enable a fairness compliance agent (such as a fairness compliance professional) to audit and/or continuously monitor compliance of an AI or ML model with the above-indicated obligation. This may be independent of the developer(s) and/or provider(s) of the model.

Thirdly, examples may enable protected individual characteristics to remain private, secure, and/or inaccessible to the developer(s) and/or provider(s) of the model. Such characteristics may nevertheless be used by the fairness compliance agent for fairness audits and/or alignment activities.

Examples described herein may therefore be used for compliance purposes. Such examples may be used to demonstrate fairness.

*Known Systems*

Existing approaches to fair representation learning may be broadly categorised into methods focusing on disentanglement and adversarial training.

*Known System: Disentanglement-Based Approaches*

One known disentanglement-based system is described in Creager, E., Madras, D., Jacobsen, J-H., Weis, M., Swersky, K., Pitassi, T., & Zemel, R. (2019) (Flexibly Fair Representation Learning by Disentanglement; International Conference on Machine Learning*). This system uses a disentangled variational autoencoder (VAE)-based approach that disentangles sensitive and non-sensitive attributes within a latent representation. This provides fairness by manipulating a sensitive subspace. This system incorporates a reconstruction loss term. The reconstruction loss term may be less effective when a fairness compliance professional only has access to a limited, distinct dataset compared to downstream model developers.

*Known System: Adversarial Training Approaches*

One known adversarial training system is described in *Zhang, B. H., Lemoine, B., & Mitchell, M. (2018) (Mitigating Unwanted Biases with Adversarial Learning; AAAI/ACM Conference on AI, Ethics, and Society).* This system uses a generative adversarial network (GAN)-style adversary network that uses downstream model predictions or task labels as inputs. This system is not suitable for federated learning setups in which a fairness compliance professional node (responsible for training the adversary network) lacks access to downstream task-related information.

Another known adversarial training system is described in *Madras, D., Creager, E., Pitassi, T., & Zemel, R. (2018) (Learning Adversarially Fair and Transferable Representations; International Conference on Machine Learning).* Similar to disentangled VAE-based approaches, this system uses a reconstruction loss term and may not be especially effective when the dataset of the fairness compliance professional is significantly smaller than or different from that of the downstream developers.

The disentanglement-based and adversarial training approaches may operate under an assumption of full access to sensitive attributes. This may present challenges when legal and/or privacy constraints restrict such access.

*Known System: Privacy-Preserving Fairness Approaches*

One known privacy-preserving fairness system is described in *Mozannar, H., Ohannessian, M., & Srebro, N. (2020) (Fair Learning with Private Demographic Data; International Conference on Machine Learning).* This system balances privacy and fairness by enforcing differential privacy on sensitive information. However, the system design primarily focuses on private release of sensitive attributes, and not on directly creating inherently fair representations. This can limit effectiveness for comprehensive bias mitigation.

Another known privacy-preserving fairness system is described in Ezzeldin, Y. H., Yan, S., He, C., Ferrara, E., & Avestimehr, A. S. (2023) (Fairfed: Enabling Group Fairness in Federated Learning; AAAI Conference on Artificial Intelligence*).* This system aggregates locally trained fairness-aware models within a federated learning framework. A post-hoc model-merging strategy is used. As a result, representations may not be inherently fair.

A further known privacy-preserving fairness system is described in Qi, T., Wu, F., Wu, C., Lyu, L., Xu, T., Liao, H., ... Xie, X. (2022) (FairVFL: A Fair Vertical Federated Learning Framework with Contrastive Adversarial Learning; Advances in Neural Information Processing Systems*).* This system is designed to addresses fairness in a vertical federated learning setup in which different features of the same sample are split across nodes. This system relies on adversarial learning to remove biases at the node level. This system is, however, not readily adaptable to horizontal federated learning scenarios. A goal of horizontal federated learning scenarios is to train on shared feature sets across distributed nodes collaboratively.

*Comparison To Known Systems: Disentangled VAE*

As explained above, *Creager, et al. (2019)* provides a disentangled VAE-based approach to learning fair representations that can be readily adapted at test time to provide fairness across multiple sensitive groups or subgroups. By leveraging multiple sensitive attribute labels during training, a disentangled structure is introduced in the learned representation. This isolates information about each sensitive attribute within a specific subspace. The system aims to learn a latent representation, [*z, b*]*,* where z represents a non-sensitive subspace and b represents a sensitive subspace. The system primarily seeks to disentangle non-sensitive and sensitive dimensions, to ensure that different sensitive dimensions are independent, and to maximise the mutual information between each sensitive attribute and its corresponding latent dimension. In the system, fairness, such as demographic parity, may be achieved by either removing or replacing the sensitive dimensions from the learned representation.

Examples described herein may differ from such systems by using a federated learning setup to train a shared concept bottleneck-style representation network. Examples described herein may incorporate both orthogonalization loss and adversarial training. Orthogonalization loss may be used for disentanglement.

*Comparison To Known Systems: Disentanglement*

Sarhan, M. H., Navab, N., Eslami, A., & Albarqouni, S. (2020) (Fairness by Learning Orthogonal Disentangled Representations; European Conference on Computer Vision*)* proposes a disentanglement-based system to address the problem of fair representation learning. By enforcing orthogonal constraints, the system is designed to disentangle target task-related and sensitive attribute-related features within a learned latent space. The system treats a sensitive attribute, s, and a target label, y, as separate, independent generative factors. A learned representation is decomposed into two parts, namely a target code, $z\_T$, and a residual sensitive code, $z\_S.$ The target code, $z\_T$, encodes information needed for a task. The residual sensitive code, z_S, captures the sensitive information. The orthogonality between these codes serves as a proxy for independence. Thus, the target code is invariant to the sensitive attributes.

While such a system uses orthogonal constraints for disentanglement, examples described herein may differ from such an approach by using a federated learning setup combined with adversarial training. Such examples may achieve a shared, fair representation.

*Comparison To Known Systems: Differential Privacy*

The systems described in *Mozannar, et al. (2020)* and Tran, C., Fioretto, F., & Van Hentenryck, P. (2021) (Differentially Private and Fair Deep Learning: A Lagrangian Dual Approach; AAAI Conference on Artificial Intelligence*)* use differentially private release of sensitive attributes to facilitate learning of non-discriminatory downstream models. Such systems primarily address the challenge of balancing privacy and fairness by ensuring that the released sensitive information adheres to differential privacy guarantees while still enabling the learning of fair models.

While such systems primarily focus on the differentially private release of sensitive attributes for developing fair downstream models using those released sensitive attributes, examples described herein may differ from such an approach by training a fair representation network that can be used for developing fair downstream models.

*Comparison To Known Systems: Merging Locally Trained Fairness-aware Models Within a Federated Learning System*

The systems described in *Ezzeldin, et al. (2023)* and Zeng, Y., Chen, H., & Lee, K. (2021) (Improving Fairness via Federated Learning; arXiv preprint arXiv: 2110.15545*)* primarily address the challenge of merging locally trained fairness-aware models within a federated learning setup. The design of these systems focuses on combining models trained independently across different clients to achieve a fair outcome.

In contrast, examples described herein may learn a shared, fair representation from initiation. Examples described herein may provide end-to-end joint training of a shared fair representation. This differs from post-hoc aggregation of locally trained models. By incorporating adversarial training and orthogonal loss for disentanglement within a federated learning framework, examples described herein may provide a representation that is, itself, inherently fair across all participants.

*Comparison To Known Systems: Fair Representation Learning in A Vertical Federated Learning Setup*

The system described in *Qi, et al. (2022)* seeks to provide fair representation learning in a vertical federated learning setup in which the features of the same sample are split across different nodes. Additionally, in this system each node learns local data representations from fairness-insensitive features, which are then uploaded to a central server and aggregated into a unified representation. This representation is further processed on nodes with fairness-sensitive features using adversarial learning techniques to remove biases and ensure fairness.

In contrast, examples described herein may use a horizontal federated learning setup. Samples with the same features may be distributed across different nodes. Additionally, examples described herein may provide end-to-end joint training of a shared fair representation. Privacy concerns associated with sharing unified representations across nodes may be addressed by using distinct datasets to train classification prediction models and sensitive attribute prediction models separately. This separation may not only enhance the privacy of sensitive attributes, but also allow for the use of down-sampling strategies to address class imbalances in downstream task training. This may provide greater flexibility and protection.

*Comparison To Known Systems: Input Misalignment*

Examples described herein might not address scenarios in which there is input misalignment between the two entities participating in federated learning. This is a known limitation of horizontal federated learning approaches. Horizontal federated learning assumes aligned inputs across parties. Horizontal federated learning differs from vertical federated learning (VFL) setups, which are specifically designed to handle input misalignments. An example of a VFL setup is FairVFL. However, FairVFL sacrifices the independence of data samples across servers to achieve this.

In contrast, examples described herein may maintain the independence of data samples between entities. This may be especially effective in deployment scenarios such as those described herein. Preserving this independence ensures, or at least increases the likelihood of, privacy and fairness.

*Further Details*

Certain examples described herein may be implemented via instructions that are stored within a computer-readable storage medium, such as a non-transitory computer-readable medium. The computer readable medium may comprise one or more of a rotating magnetic disk, a rotating optical disk, a flash random access memory (RAM) chip, and other mechanically moving or solid-state storage media. In use, the instructions are executed by one or more of processors to cause said processor to perform the operations described above.

The above embodiments, variations and examples are to be understood as illustrative. Further embodiments, variations and examples are envisaged. Although certain components of each example have been separately described, it is to be understood that functionality described with reference to one example may be suitably implemented in another example, and that certain components may be omitted depending on the implementation. It is to be understood that any feature described in relation to any one example may be used alone, or in combination with other features described, and may also be used in combination with one or more features of any other of the examples, or any combination of any other of the examples. For example, features described with respect to the system components may also be adapted to be performed as part of the described methods. Furthermore, equivalents and modifications not described above may also be employed without departing from the scope of the invention, which is defined in the accompanying claims. The following clauses detail certain aspects of the invention, which may or may not be presently claimed, but which may form the basis for future amendments and/or a divisional application.

1. A computer-implemented method comprising:

obtaining, by a collaboratively trained machine learning model, an embedding vector, the collaboratively trained machine learning model having been collaboratively trained by first and second entities using federated learning;

outputting, by the collaboratively trained machine learning model, an output vector, the output vector comprising a set of output vector element values;

obtaining, by a first classification head, the set of output vector element values, the first classification head having been trained by the first entity to predict a value of a first attribute based on the set of output vector element values;

outputting, by the first classification head, a predicted value of the first attribute based on the set of output vector element values, the predicted value of the first attribute being useable by the first entity to determine an accuracy of the first classification head in predicting values of the first attribute from output vector element values output by the collaboratively trained machine learning model;

obtaining, by a second classification head, the set of output vector element values, the second classification head having been trained by the second entity to predict a value of a second attribute based on the set of output vector element values;

outputting, by the second classification head, a predicted value of the second attribute based on the set of output vector element values, the predicted value of the second attribute being useable by the second entity to determine an accuracy of the second classification head in predicting values of the second attribute from output vector element values output by the collaboratively trained machine learning model; and

updating the collaboratively trained machine learning model, based on at least the predicted value of the second attribute, to:

increase the accuracy of the first classification head in predicting values of the first attribute from output vector element values output by the collaboratively trained machine learning model; and

decrease the accuracy of the second classification head in predicting values of the second attribute from output vector element values output by the collaboratively trained machine learning model.

2. A method according to clause 1, wherein the output vector comprises a further set of output vector element values, and wherein the further set of output vector element values is inaccessible to the first entity.

3. A method according to clause 2, wherein the further set of output vector element values is more representative of the second attribute than the first attribute.

4. A method according to clause 2 or 3, wherein the set of output vector element values comprises more output vector element values than the further set of output vector element values.

5. A method according to any of clauses 2 to 4, comprising:

obtaining, by a third classification head, the further set of output vector element values, the third classification head having been trained by the second entity to predict a further value of the second attribute based on the further set of output vector element values; and

outputting, by the third classification head, a further predicted value of the second attribute based on the further set of output vector element values, the further predicted value of the second attribute being useable by the second entity to determine an accuracy of the third classification head in predicting values of the second attribute from further output vector element values output by the collaboratively trained machine learning model.

6. A method according to clause 5, wherein the updating of the collaboratively trained machine learning model is based on a comparison involving the further predicted value of the second attribute and a reference value of the second attribute, and wherein updating the collaboratively trained machine learning model comprises updating the collaboratively trained machine learning model to increase the accuracy of the third classification head in predicting values of the second attribute from further output vector element values output by the collaboratively trained machine learning model.

7. A method according to clause 6, wherein the updating of the collaboratively trained machine learning model is based on a comparison involving the predicted value of the second attribute and the reference value of the second attribute.

8. A method according to any of clauses 1 to 6, wherein the updating of the collaboratively trained machine learning model is based on a comparison involving the predicted value of the second attribute and a reference value of the second attribute.

9. A method according to clause 7 or 8, wherein the reference value of the second attribute is inaccessible to the first entity.

10. A method according to any of clauses 1 to 9, wherein the set of output vector element values is more representative of the first attribute than the second attribute.

11. A method according to any of clauses 1 to 10, wherein the updating of the collaboratively trained machine learning model is based on a comparison involving the predicted value of the first attribute and a reference value of the first attribute.

12. A method according to any of clause 1 to 11, comprising:

obtaining, by an embedding model, input data; and
outputting, by the embedding model and based on the input data, the embedding vector.

13. A method according to clause 12, wherein the first entity has black-box access to the embedding model and/or wherein the second entity has black-box access to the embedding model.

14. A method according to any of clauses 1 to 13, wherein the collaboratively trained machine learning model having been collaboratively trained by the first and second entities using federated learning comprises the first entity having used first training data to train the collaboratively trained machine learning model, the second entity having used second training data to train the collaboratively trained machine learning model, wherein the first training data is inaccessible to the second entity, and wherein the second training data is inaccessible to the first entity.

15. A method according to any of clauses 1 to 14, wherein updating the collaboratively trained machine learning model comprises:
applying a parameter-level orthogonalization loss to a final layer of the collaboratively trained machine learning model.

16. A method according to clause 15, wherein the parameter-level orthogonalization loss is defined as $\|W^T W - I\|_F^2$, where $W^T W$ represents a weighting vector matrix, where $I$ represents an identity matrix, and where $\|\cdot\|_F^2$ represents Frobenius norm squared.

17. A method according to any of clauses 1 to 16, wherein updating the collaboratively trained machine learning model comprises:
applying a regularization based on a correlation matrix derived from output vector element values of the collaboratively trained machine learning model.

18. A method according to clause 17, wherein the correlation matrix is defined as $\frac{1}{n} Z^T Z$, where $Z^T Z$ represents a matrix of output vectors for a batch of inputs, and where $n$ represents a represents a size of the batch of inputs.

19. A method according to any of clauses 1 to 18, wherein the first classification head having been trained by the first entity comprises the first classification head having been trained by the first entity using cross-entropy loss with the first attribute.

20. A method according to any of clauses 1 to 19, wherein the second classification head having been trained by the second entity comprises the second classification head having been trained by the second entity using cross-entropy loss with the second attribute.

21. A method according to any of clauses 1 to 20, wherein the second attribute represents a protected characteristic and/or personally identifiable information.

22. A computer-implemented method comprising:

obtaining, by a machine learning model, an embedding vector;
outputting, by the machine learning model, an output vector, the output vector comprising a set of output vector element values and a further set of output vector element values;
obtaining, by a classification head, the set of output vector element values, the classification head having been trained to predict a value of an attribute based on the set of output vector element values;
outputting, by the classification head, a predicted value of the attribute based on the set of output vector element values; and
updating the machine learning model, based on at least the predicted value of the attribute, to:

decrease an accuracy of the classification head in predicting values of the attribute from sets of output vector element values output by the machine learning model; and
increase an accuracy of a further classification head in predicting values of the attribute from further sets of output vector element values output by the machine learning model.

23. A method according to clause 22, wherein the attribute represents a protected characteristic and/or personally identifiable information.

24. A system configured to perform a method according to any of clauses 1 to 23.

25. A computer program configured to perform a method according to any of clauses 1 to 23.

**Claims**

1. A computer-implemented method comprising:

obtaining, by a collaboratively trained machine learning model, an embedding vector, the collaboratively trained machine learning model having been collaboratively trained by first and second entities using federated learning;
outputting, by the collaboratively trained machine learning model, an output vector, the output vector comprising a set of output vector element values;
obtaining, by a first classification head, the set of output vector element values, the first classification head having been trained by the first entity to predict a value of a first attribute based on the set of output vector element values;
outputting, by the first classification head, a predicted value of the first attribute based on the set of output vector element values, the predicted value of the first attribute being useable by the first entity to determine an accuracy of the first classification head in predicting values of the first attribute from output vector element values output by the collaboratively trained machine learning model;
obtaining, by a second classification head, the set of output vector element values, the second classification head having been trained by the second entity to predict a value of a second attribute based on the set of output vector element values;
outputting, by the second classification head, a predicted value of the second attribute based on the set of output vector element values, the predicted value of the second attribute being useable by the second entity to determine an accuracy of the second classification head in predicting values of the second attribute from output vector element values output by the collaboratively trained machine learning model; and
updating the collaboratively trained machine learning model, based on at least the predicted value of the second attribute, to:

increase the accuracy of the first classification head in predicting values of the first attribute from output vector element values output by the collaboratively trained machine learning model; and
decrease the accuracy of the second classification head in predicting values of the second attribute from output vector element values output by the collaboratively trained machine learning model.

2. A method according to claim 1, wherein the output vector comprises a further set of output vector element values, and wherein the further set of output vector element values is inaccessible to the first entity; optionally:

   wherein the further set of output vector element values is more representative of the second attribute than the first attribute; and/or
   wherein the set of output vector element values comprises more output vector element values than the further set of output vector element values.

3. A method according to claim 2, comprising:

   obtaining, by a third classification head, the further set of output vector element values, the third classification head having been trained by the second entity to predict a further value of the second attribute based on the further set of output vector element values; and
   outputting, by the third classification head, a further predicted value of the second attribute based on the further set of output vector element values, the further predicted value of the second attribute being useable by the second entity to determine an accuracy of the third classification head in predicting values of the second attribute from further output vector element values output by the collaboratively trained machine learning model.

4. A method according to claim 3, wherein the updating of the collaboratively trained machine learning model is based on a comparison involving the further predicted value of the second attribute and a reference value of the second attribute, and wherein updating the collaboratively trained machine learning model comprises updating the collaboratively trained machine learning model to increase the accuracy of the third classification head in predicting values of the second attribute from further output vector element values output by the collaboratively trained machine learning model.

5. A method according to claim 4, wherein the updating of the collaboratively trained machine learning model is based on a comparison involving the predicted value of the second attribute and the reference value of the second attribute; optionally
   wherein the reference value of the second attribute is inaccessible to the first entity.

6. A method according to any of claims 1 to 4, wherein the updating of the collaboratively trained machine learning model is based on a comparison involving the predicted value of the second attribute and a reference value of the second attribute; optionally
   wherein the reference value of the second attribute is inaccessible to the first entity.

7. A method according to any of claims 1 to 6, wherein the set of output vector element values is more representative of the first attribute than the second attribute; and/or
   wherein the updating of the collaboratively trained machine learning model is based on a comparison involving the predicted value of the first attribute and a reference value of the first attribute.

8. A method according to any of claims 1 to 7, comprising:

   obtaining, by an embedding model, input data; and
   outputting, by the embedding model and based on the input data, the embedding vector; optionally
   wherein the first entity has black-box access to the embedding model and/or wherein the second entity has black-box access to the embedding model.

9. A method according to any of claims 1 to 8, wherein the collaboratively trained machine learning model having been collaboratively trained by the first and second entities using federated learning comprises the first entity having used first training data to train the collaboratively trained machine learning model, the second entity having used second training data to train the collaboratively trained machine learning model, wherein the first training data is inaccessible to the second entity, and wherein the second training data is inaccessible to the first entity.

10. A method according to any of claims 1 to 9, wherein updating the collaboratively trained machine learning model comprises:

    applying a parameter-level orthogonalization loss to a final layer of the collaboratively trained machine learning model; optionally

wherein the parameter-level orthogonalization loss is defined as $\|W^T W - I\|_F^2$, where $W^T W$ represents a weighting vector matrix, where $I$ represents an identity matrix, and where $\|\cdot\|_F^2$ represents Frobenius norm squared.

11. A method according to any of claims 1 to 10, wherein updating the collaboratively trained machine learning model comprises:

applying a regularization based on a correlation matrix derived from output vector element values of the collaboratively trained machine learning model; optionally

wherein the correlation matrix is defined as $\frac{1}{n} Z^T Z$, where $Z^T Z$ represents a matrix of output vectors for a batch of inputs, and where $n$ represents a represents a size of the batch of inputs.

12. A method according to any of claims 1 to 11, wherein the first classification head having been trained by the first entity comprises the first classification head having been trained by the first entity using cross-entropy loss with the first attribute; and/or

wherein the second classification head having been trained by the second entity comprises the second classification head having been trained by the second entity using cross-entropy loss with the second attribute; and/or
wherein the second attribute represents a protected characteristic and/or personally identifiable information.

13. A computer-implemented method comprising:

obtaining, by a machine learning model, an embedding vector;
outputting, by the machine learning model, an output vector, the output vector comprising a set of output vector element values and a further set of output vector element values;
obtaining, by a classification head, the set of output vector element values, the classification head having been trained to predict a value of an attribute based on the set of output vector element values;
outputting, by the classification head, a predicted value of the attribute based on the set of output vector element values; and
updating the machine learning model, based on at least the predicted value of the attribute, to:

decrease an accuracy of the classification head in predicting values of the attribute from sets of output vector element values output by the machine learning model; and
increase an accuracy of a further classification head in predicting values of the attribute from further sets of output vector element values output by the machine learning model; optionally

wherein the attribute represents a protected characteristic and/or personally identifiable information.

14. A system configured to perform a method according to any of claims 1 to 13.

15. A computer program configured to perform a method according to any of claims 1 to 13.

100

FIG. 1

200

```
┌─────────────────┐                    ┌─────────────────┐
│   Ref. Value    │                    │   Ref. Value    │
│      260        │                    │      265        │
└─────────────────┘                    └─────────────────┘
         │                                      │
         ▼                                      ▼
┌─────────────────┐                    ┌─────────────────┐
│  First Entity   │                    │ Second Entity   │
│      225        │                    │      230        │
└─────────────────┘                    └─────────────────┘
         ▲                                      ▲
         │                                      │
┌─────────────────┐                    ┌─────────────────┐
│   Pred. Value   │                    │   Pred. Value   │
│      245        │                    │      255        │
└─────────────────┘                    └─────────────────┘
         ▲                                      ▲
         │                                      │
┌─────────────────┐                    ┌─────────────────┐
│   Classifier    │                    │   Classifier    │
│      240        │                    │      250        │
└─────────────────┘                    └─────────────────┘
         ▲                                      ▲
         └──────────────┬───────────────────────┘
                        │
┌──────────────────────────────────────┐ ┌ ─ ─ ─ ─ ─ ─ ┐
│      Output Vector (Subset)          │      235-2
│              235-1                   │ └ ─ ─ ─ ─ ─ ─ ┘
└──────────────────────────────────────┘
                     ▲
┌──────────────────────────────────────────────────────┐
│        Collaboratively Trained Model                  │
│                   220                                  │
└──────────────────────────────────────────────────────┘
                     ▲
┌──────────────────────────────────────────────────────┐
│             Embedding Vector                          │
│                   215                                  │
└──────────────────────────────────────────────────────┘
                     ▲
┌──────────────────────────────────────────────────────┐
│              Embedding Model                          │
│                   210                                  │
└──────────────────────────────────────────────────────┘
                     ▲
┌──────────────────────────────────────────────────────┐
│                Input Data                             │
│                   205                                  │
└──────────────────────────────────────────────────────┘
```

FIG. 2

300

```
┌─────────────────┐        ┌─────────────────────────────┐
│   Ref. Value    │        │         Ref. Value          │
│      360        │        │            365              │
└─────────────────┘        └─────────────────────────────┘
        │                              │
        ▼                              ▼
┌─────────────────┐        ┌─────────────────────────────┐
│  First Entity   │        │        Second Entity        │
│      325        │        │            330              │
└─────────────────┘        └─────────────────────────────┘
        ▲                       ▲              │
        │              ┌────────┴──────┐       │
┌─────────────────┐  ┌─────────────────┐ ┌─────────────────┐
│  Pred. Value    │  │   Pred. Value   │ │   Pred. Value   │
│      345        │  │      355        │ │      375        │
└─────────────────┘  └─────────────────┘ └─────────────────┘
        ▲                   ▲                     ▲
        │                   │                     │
┌─────────────────┐  ┌─────────────────┐ ┌─────────────────┐
│   Classifier    │  │   Classifier    │ │   Classifier    │
│      340        │  │      350        │ │      370        │
└─────────────────┘  └─────────────────┘ └─────────────────┘
        ▲                   ▲                     ▲
        │                   │                     │
┌──────────────────────────────────────────┬──────────────┐
│       Output Vector (Subset)             │              │
│              325-1                        │    325-2     │
└──────────────────────────────────────────┴──────────────┘
                      ▲                        ▲
┌──────────────────────────────────────────────────────────┐
│            Collaboratively Trained Model                 │
│                       320                                │
└──────────────────────────────────────────────────────────┘
                           ▲
┌──────────────────────────────────────────────────────────┐
│                  Embedding Vector                        │
│                       315                                │
└──────────────────────────────────────────────────────────┘
                           ▲
┌──────────────────────────────────────────────────────────┐
│                  Embedding Model                         │
│                       310                                │
└──────────────────────────────────────────────────────────┘
                           ▲
┌──────────────────────────────────────────────────────────┐
│                    Input Data                            │
│                       305                                │
└──────────────────────────────────────────────────────────┘
```

FIG. 3

400

| Minimize $\ell_{CE}$ on $\mathcal{D}_y$ | Maximize $\ell_{CE}$ on $\mathcal{D}_s$ | Minimize $\ell_{CE}$ on $\mathcal{D}_s$ |
|---|---|---|

445      455      475

| Classifier 440 | Classifier 450 | Classifier 470 |
|---|---|---|

| $n_1(x),\ n_2(x)$ 425-1 | | $s_1(x),\ s_2(x)$ 425-2 |
|---|---|---|

Shared representation layers trained with FedAvg
420

| $\mathcal{D}_y = \{E(x_i)\}_{i=1}^{n}$ | 415-2 | $\mathcal{D}_s = \{E(x'_j)\}_{j=1}^{m}$ |
|---|---|---|

415-1

Pre-Trained Embedding Model (Frozen)
410

| $\{x_i\}_{i=1}^{n}$ | | $\{x'_j\}_{j=1}^{m}$ |
|---|---|---|

480

405-1           405-2

FIG. 4

**EUROPEAN SEARCH REPORT**

Application Number

EP 24 22 1634

## DOCUMENTS CONSIDERED TO BE RELEVANT

| Category | Citation of document with indication, where appropriate, of relevant passages | Relevant to claim |
|---|---|---|
| X | US 2024/289637 A1 (LENGA MATTHIAS [DE] ET AL) 29 August 2024 (2024-08-29) * paragraphs [0002] - [0104] * | 1-15 |
| A | CN 117 350 369 A (UNIV NORTHWESTERN POLYTECHNICAL) 5 January 2024 (2024-01-05) * pages 1-8 * | 1-15 |
| A | RICHARD J CHEN ET AL: "Algorithm Fairness in AI for Medicine and Healthcare", ARXIV.ORG, CORNELL UNIVERSITY LIBRARY, 201 OLIN LIBRARY CORNELL UNIVERSITY ITHACA, NY 14853, 2 October 2021 (2021-10-02), XP091070865, * pages 1-24 * | 1-15 |

**CLASSIFICATION OF THE APPLICATION (IPC)**

INV.
G06N3/045
G06N3/098

**TECHNICAL FIELDS SEARCHED (IPC)**

G06N

The present search report has been drawn up for all claims

| Place of search | Date of completion of the search | Examiner |
|---|---|---|
| The Hague | 9 May 2025 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1634

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | | Publication date | Patent family member(s) | | Publication date |
|---|---|---|---|---|---|
| US 2024289637 | A1 | 29-08-2024 | EP<br>US<br>WO | 4359999 A1<br>2024289637 A1<br>2022268656 A1 | 01-05-2024<br>29-08-2024<br>29-12-2022 |
| CN 117350369 | A | 05-01-2024 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CREAGER, E. ; MADRAS, D. ; JACOBSEN, J-H. ; WEIS, M. ; SWERSKY, K. ; PITASSI, T. ; ZEMEL, R.** *Flexibly Fair Representation Learning by Disentanglement; International Conference on Machine Learning*, 2019
- **EZZELDIN, Y. H. ; YAN, S. ; HE, C. ; FERRARA, E. ; AVESTIMEHR, A. S.** Fairfed: Enabling Group Fairness in Federated Learning. *AAAI Conference on Artificial Intelligence*, 2023
- **QI, T. ; WU, F. ; WU, C. ; LYU, L. ; XU, T. ; LIAO, H. ; XIE, X.** FairVFL: A Fair Vertical Federated Learning Framework with Contrastive Adversarial Learning. *Advances in Neural Information Processing Systems*, 2022

- **SARHAN, M. H. ; NAVAB, N. ; ESLAMI, A. ; ALBARQOUNI, S.** Fairness by Learning Orthogonal Disentangled Representations. *European Conference on Computer Vision*, 2020
- **TRAN, C. ; FIORETTO, F. ; VAN HENTENRYCK, P.** Differentially Private and Fair Deep Learning: A Lagrangian Dual Approach. *AAAI Conference on Artificial Intelligence*, 2021
- **ZENG, Y. ; CHEN, H. ; LEE, K.** Improving Fairness via Federated Learning. *arXiv: 2110.15545*, 2021